# FASCICULE DE BREVET EUROPEEN

(11) **EP 2 523 820 B1**
(45) Date de publication et mention de la délivrance du brevet: **02.12.2015**
(21) Numéro de dépôt: 10809025.9
(22) Date de dépôt: 15.12.2010
(51) Int. Cl.: B60W 10/06, B60K 28/00, F02D 17/04, F02N 11/08, B60W 50/08, B60Q 9/00, B60W 50/14

(54) **PROCEDE D'INFORMATION DU CONDUCTEUR D'UN VEHICULE MUNI D'UN SYSTEME D'ARRET ET DE REDEMARRAGE AUTOMATIQUE DU MOTEUR, EN CAS D'INDISPONIBILITE DE L'ARRET AUTOMATIQUE**
VERFAHREN ZUR INFORMATION DES FAHRERS EINES FAHRZEUGES MIT EINEM SYSTEM ZUM AUTOMATISCHENS STOPPEN UND NEUSTARTEN DES MOTORS IM FALLE DER UNVERFÜGBARKEIT EINES AUTOMATISCHEN STOPPS
METHOD FOR INFORMING THE DRIVER OF A VEHICLE PROVIDED WITH A SYSTEM FOR AUTOMATICALLY STOPPING AND RESTARTING THE ENGINE IN THE EVENT AN AUTOMATIC STOP IS UNAVAILABLE

(30) Priorité: 12.01.2010 FR 1050170
(43) Date de publication de la demande: 21.11.2012
(73) Titulaire: Peugeot Citroën Automobiles SA, 78140 Vélizy Villacoublay (FR)
(72) Inventeur: GREGORI, Fabrice, F-92260 Fontenay aux Roses (FR); REVEILLE, Tony, F-91940 Les Ulis (FR)
(74) Mandataire: Renous Chan, Véronique
(86) Numéro de dépôt international: PCT/FR2010/052745
(87) Numéro de publication internationale: WO 2011/086260

(56) Documents cités:
- EP-A1- 1 469 195
- EP-A1- 1 612 408
- EP-A2- 0 952 036
- WO-A1-94/15808
- JP-A- 9 068 064
- US-A1- 2002 096 137
- US-A1- 2004 029 677

## Description

La présente invention revendique la priorité de la demande française 1050170 déposée le 12 janvier 2010.

La présente invention concerne un procédé permettant d'informer le conducteur d'un véhicule muni d'un moteur thermique et d'un système d'arrêt et de redémarrage automatique du moteur, que l'indisponibilité de l'arrêt automatique du moteur est un fonctionnement normal et donc qu'il n'a pas à s'inquiéter. L'information fournie par la mise en oeuvre du procédé permet donc de rassurer le conducteur.

Les systèmes d'arrêt et de redémarrage automatique du moteur thermique des véhicules tendent à se généraliser. Ces systèmes, souvent désignés par l'abréviation STT ou par l'expression anglaise Stop & Start System, permettent de diminuer la consommation de carburant et donc les émissions polluantes, comme l'émission de dioxyde de carbone. Par la suite, on désignera par système STT tout système d'arrêt et de redémarrage automatique du moteur thermique d'un véhicule, lequel peut être du type hybride ou non.

Le fonctionnement des véhicules équipés d'un système STT nécessite deux choses : d'une part, une demande du conducteur et, d'autre part, une autorisation du véhicule pour entrer en phase d'arrêt automatique du moteur. Sous certaines contraintes, (par exemple niveau énergétique du véhicule faible, besoin du groupe motopropulseur, besoin de protection ou de régulation thermique), le « système véhicule » peut interdire l'arrêt automatique du moteur. Par « système véhicule », on désigne un ensemble de systèmes de contrôle habituel d'organes du véhicule, tels que par exemple les freins, le moteur, la boite de vitesse, l'assistance de la direction, la charge de la batterie, les systèmes de sécurité ABS et ESP. Il s'agit donc d'une surveillance fonctionnelle.

Le fonctionnement des systèmes STT impose par exemple que les moyens de remise en marche du moteur thermique soient suffisants. Si une batterie est utilisée pour actionner le démarreur, il faut que la capacité et la charge de la batterie soient suffisantes. Une solution consiste alors à augmenter la capacité de la batterie, mais au détriment du coût et de l'encombrement. Selon une autre solution, la charge de la batterie est contrôlée avant chaque arrêt automatique du moteur afin de s'assurer que la charge de la batterie sera suffisante pour redémarrer automatiquement le moteur. Si ce n'est pas le cas, le moteur n'est pas arrêté automatiquement. Cependant, ce fonctionnement peut être déroutant pour le conducteur car ce dernier s'attend à l'arrêt du moteur dans certaines circonstances, par exemple à l'arrêt à un feu rouge de signalisation. De plus, certains organes du véhicules, tels que les phares, la radio ou encore le climatiseur, consomment de l'énergie électrique et, si la batterie n'est pas assez chargée, la remise en marche automatique du moteur pourrait être difficile, voir impossible. Il peut alors être nécessaire d'interdire l'arrêt automatique du moteur, de façon à maintenir une charge suffisante de la batterie. Ces indisponibilités, momentanées, de l'arrêt automatique du moteur à l'insu du conducteur, peuvent le surprendre et l'inquiéter.

La présente invention propose donc d'avertir le conducteur en lui envoyant une information rassurante, après, contrôle de certaines conditions. En d'autres termes, le conducteur est averti de l'indisponibilité de la fonction arrêt automatique, malgré sa demande d'arrêt du moteur, lorsque le « système véhicule » ne l'autorise pas, par exemple en fonction d'impératifs de sécurité et/ou d'éléments de prestation fournis par le véhicule (comme la climatisation de l'habitacle par exemple).

Des solutions partielles ont déjà été proposées. Par exemple, le brevet US 4555006 décrit un dispositif qui avertit le conducteur par un signal lumineux que le moteur est à l'arrêt.

La demande de brevet EP 1077149 B1 décrit un système STT pourvu d'une alarme qui se déclenche pour indiquer au conducteur que le moteur est arrêté. Il propose aussi d'informer le conducteur du redémarrage du moteur lorsque le conducteur relâche la pédale d'embrayage.

Le brevet US 4481425 décrit un système STT comprenant un avertisseur lumineux informant le conducteur du fonctionnement ou de l'arrêt du système. On connait encore le document EP1612408A1 conforme au préambule de la revendication 1.

Ces documents ne décrivent pas un procédé permettant de rassurer le conducteur que le non-arrêt automatique du moteur n'est pas une défaillance du système STT mais qu'il correspond à un fonctionnement normal, alors que le conducteur s'attend à l'arrêt automatique du moteur thermique par le système STT.

De façon plus précise, l'invention concerne un procédé d'information rassurante du conducteur d'un véhicule muni d'un moteur thermique et d'un système d'arrêt et de redémarrage automatique STT du moteur, conforme à l'objet de la revendication 1.

L'avertissement du conducteur peut prendre la forme d'une information lumineuse et/ou sonore, par exemple l'allumage d'une lampe, l'affichage d'un message ou d'un symbole au tableau de bord ou dans un écran spécifique.

La détermination que le système véhicule autorise ou interdit l'arrêt du moteur peut consister à s'assurer que l'arrêt du moteur peut être effectué dans de bonnes conditions de sécurité et de prestations offertes par le véhicule (par exemple par la vérification de l'état du frein, de la direction assistée, du système ABS et/ou ESP et de la suspension du véhicule).

On détermine si le système autorise ou interdit l'arrêt du moteur thermique du véhicule par exemple par au moins l'une des étapes de vérification suivantes :
i. la présence du conducteur dans l'habitacle (par exemple, déterminer si la ceinture de sécurité du conducteur est fermée ou ouverte et/ou si la portière du conducteur est ouverte ou fermée), ou
ii. l'état du système thermique de l'habitacle (par exemple si le climatiseur est en convergence vers une température habitacle demandée par le client), ou
iii. l'état du groupe motopropulseur incluant le moteur lui-même et la boite de vitesses, ou
iv. l'état du vide dans le système de freinage pour préserver une qualité de freinage, (par exemple la comparaison du niveau de vide dans le système de freinage avec un seuil prédéterminé et si ledit niveau de vide est inférieur audit seuil, l'arrêt automatique du moteur thermique n'est pas autorisé), ou
v. l'état du système d'alimentation et de gestion énergétique et électrique, lequel peut concerner au moins l'état de charge de la batterie du véhicule, l'arrêt automatique du moteur étant interdit si ladite charge est inférieure à un seuil prédéterminé, ou
vi. la position du levier de changement de vitesses, la position Marche Arrière interdisant l'arrêt automatique du moteur, ou
vii. la vitesse atteinte par le véhicule après le désengagement du frein de stationnement électrique ou après la mise en marche du moteur à l'aide de la clé de démarrage (le terme « clé de démarrage » incluant tout autre moyen tel qu'un bouton poussoir ou une carte), ou
viii. l'état de fermeture du capot du compartiment moteur, l'autorisation d'arrêt automatique du moteur n'étant pas donnée si le capot n'est pas fermé.

L'avertissement du conducteur peut comporter une information précisant que l'indisponibilité de l'arrêt automatique du moteur thermique pourrait être terminée après un intervalle de temps déterminé, lequel peut être de l'ordre de quelques secondes.

Selon un mode de réalisation avantageux, on arrête ledit avertissement du conducteur si ce dernier interrompt sa demande d'arrêt automatique du moteur. Par exemple, ledit avertissement peut être interrompu, dans le cas d'un véhicule muni d'une boite de vitesses manuelle pilotée ou automatique, si le conducteur relâche la pédale de frein et si le levier de la boite de vitesses est en position Auto ou Drive, ou ,lorsque le véhicule est muni d'une boite de vitesses manuelle, si le conducteur enfonce la pédale d'embrayage.

On peut également supprimer ledit avertissement du conducteur si la demande d'arrêt du moteur de la part du conducteur est valable et si l'interdiction d'arrêt du moteur par le système véhicule est terminée, ou si la fonction STT passe de l'état activé à l'état désactivé.

D'autres avantages et caractéristiques de l'invention apparaîtront au cours de la description qui suit d'un mode de réalisation de l'invention, donné à titre d'exemple non limitatif.

Selon un mode de réalisation de l'invention, le conducteur est informé par une information spécifique (visuelle et/ou sonore) de l'indisponibilité de la phase d'arrêt automatique du moteur du système STT, après une demande de passage en phase d'arrêt, si le client a demandé l'arrêt automatique du moteur, ce qui peut se traduire par les conditions 1 à 3 suivantes:
1. la demande de passage en phase d'arrêt par le conducteur est confirmée ou, dans le cas d'une situation transitoire, la demande de passage en phase d'arrêt passe de non confirmée à confirmée, et
2. la fonction STT est dans l'état activé (le conducteur disposant d'un bouton au poste de conduite permettant d'inhiber ou d'activer le système STT, le conducteur n'est averti que si la fonction STT est activée), et
3. le moteur thermique est en marche

De plus, le conducteur est averti par une information rassurante de l'indisponibilité de la phase d'arrêt que si le passage en phase d'arrêt automatique n'est pas autorisé par le système véhicule. Cette condition (4) regroupe les autorisations attendues par le véhicule pour assurer un arrêt automatique sécurisé et la réalisation des prestations fournies par le véhicule. Cette condition 4 peut se décomposer en plusieurs sous-conditions d'autorisations qui peuvent avoir diverses origines, telles que, à titre d'exemples, non exhaustifs :
a. la présence du conducteur n'est pas confirmée (par exemple, la ceinture de sécurité du conducteur n'est pas bouclée ou la porte du conducteur est ouverte),
b. le système de liaison au sol n'autorise pas l'arrêt automatique, le refus d'autorisation pouvant provenir par exemple :du système ABS ou ESP, de la direction assistée, de la suspension, par exemple du type hydrodynamique ou pneumatique, ou du frein de stationnement électrique, si le frein est serré, l'arrêt automatique du moteur thermique ne devant pas être autorisé,
c. le système thermique de l'habitacle dans des cas de convergence en température,
d. le groupe motopropulseur qui regroupe le moteur proprement-dit et la boite de vitesses, l'autorisation pouvant être refusée pour des raisons de protection des organes et/ou de pollution,
e. le système de freinage : si le niveau de vide dans le système est inférieur à un seuil prédéterminé, il est nécessaire de laisser le moteur thermique tournant de façon à faire fonctionner la pompe à vide du système de freinage, pour toujours garantir son efficacité,
f. le système d'alimentation et de gestion énergétique et électrique du véhicule : par exemple, si le niveau de charge de la batterie est insuffisant, le système véhicule ne doit pas autoriser l'arrêt automatique du moteur puisque ce dernier ne pourra probablement pas redémarrer, ou alors avec de grandes difficultés,
g. le système de contrôle de la boite de vitesses : si le levier de boite est en position Marche Arrière, l'arrêt automatique du moteur ne se produit pas,
h. de la vitesse du véhicule : l'arrêt automatique du moteur n'est autorisé que si la vitesse du véhicule est inférieure à un seuil prédéterminée,
i. de la vitesse du véhicule après la mise en marche du moteur thermique à l'aide la clé de contact ou d'un bouton poussoir de démarrage ou d'une carte de démarrage : si la vitesse du véhicule est inférieure à un seuil prédéterminé après ladite mise en marche du moteur, l'arrêt automatique du moteur n'est pas autorisé,
j. de la non- fermeture du capot moteur du véhicule : si le capot est ouvert, l'arrêt automatique du moteur n'est pas autorisé de façon à pouvoir intervenir dans le compartiment moteur en toute sécurité.

Dans certaines circonstances, l'arrêt automatique peut être différé dans le temps et il peut alors être intéressant d'informer le conducteur que sa demande d'arrêt automatique du moteur pourra néanmoins être prise en compte si le système véhicule autorise l'arrêt dans un intervalle de temps prédéterminé, par exemple dans quelques secondes (inférieur à 5 secondes par exemple). On obtient alors un arrêt différé dans le temps.

L'information spécifique avertissant le conducteur que la phase d'arrêt du moteur est indisponible doit s'interrompre dans certaines conditions.

Ainsi cette interruption peut être déclenchée si le conducteur ne demande plus l'arrêt automatique (il n'est donc plus besoin de l'informer de l'indisponibilité de l'arrêt automatique !), ce qui peut se traduire par le fait que le conducteur relâche la pédale de frein alors que le levier de boite de vitesses est sur la position Automatique lorsque ladite boite de vitesses est du type manuelle pilotée ou automatique ou encore par le fait que le conducteur enfonce la pédale d'embrayage lorsque le véhicule est muni d'une boite de vitesses manuelle.

Cette interruption va également se produire si le conducteur a bien demandé l'arrêt automatique du moteur et le système véhicule, qui avait initialement refusé l'autorisation, maintenant l'autorise (arrêt différé).

Elle peut également se produire si la fonction STT passe de l'état activé à l'état désactivé.

La présente invention permet de communiquer au conducteur que l'interdiction de la phase d'arrêt automatique, malgré sa demande d'arrêt, est une situation normale qui correspond à un fonctionnement correct du véhicule. Cette information permet de rassurer le conducteur et facilite la prise en main d'un véhicule équipé d'un système STT.

D'autres modes de réalisation que ceux décrits et représentés peuvent être conçus par l'homme du métier sans sortir du cadre de la présente invention.

## Revendications

1. Procédé d'envoi d'information rassurante au conducteur d'un véhicule muni d'un moteur thermique et d'un système d'arrêt et de redémarrage automatique STT du moteur, le procédé comportant les étapes de vérification que le conducteur a demandé l'arrêt automatique du moteur, de détermination que le système véhicule autorise ou interdit l'arrêt automatique du fait d'au moins une parmi une pluralité de contraintes, **caractérisé en ce que** si l'arrêt automatique a bien été demandé et si le système véhicule interdit l'arrêt automatique, avertissement au conducteur que le non-arrêt automatique du moteur est un fonctionnement normal, la vérification que le conducteur a demandé l'arrêt automatique comportant les étapes suivantes : la demande d'arrêt du moteur est confirmée par le système STT, et la fonction STT est activée, et le moteur n'est pas à l'arrêt..

2. Procédé selon la revendication 1 **caractérisé en ce que** l'avertissement au conducteur est sous la forme d'un message lumineux et/ou sonore.

3. Procédé selon l'une des revendications précédentes, **caractérisé en ce que** la détermination de ce que le système véhicule autorise ou interdit l'arrêt du moteur consiste à s'assurer que l'arrêt du moteur peut être effectué dans de bonnes conditions de sécurité et de prestations offertes par le véhicule par la vérification de l'état du frein, de la direction assistée, du système ABS et/ou ESP et de la suspension du véhicule

4. Procédé selon l'une des revendications précédentes, **caractérisé en ce que** la détermination de ce que le système véhicule autorise ou interdit l'arrêt du moteur consiste à s'assurer que l'arrêt du moteur peut être effectué dans de bonnes conditions de sécurité et de prestations offertes par le véhicule par au moins l'une des étapes de vérification suivantes :
- la présence du conducteur dans l'habitacle, ou
- l'état du système thermique de l'habitacle, ou
- l'état du groupe motopropulseur incluant le moteur lui-même et la boite de vitesses, ou
- l'état du vide dans le système de freinage, ou
- l'état du système d'alimentation et de gestion énergétique et électrique, ou
- la position du levier de changement de vitesses, la position Marche Arrière interdisant l'arrêt automatique du moteur, ou
- la vitesse atteinte par le véhicule après le désengagement du frein de stationnement électrique ou après la mise en marche du moteur à l'aide de la clé de démarrage, ou
- l'état d'ouverture du capot du compartiment moteur.

5. Procédé selon la revendication 4, **caractérisé en ce que** la vérification de l'état du système thermique de l'habitacle comporte la détermination de l'état de marche ou de l'arrêt du climatiseur, la marche du climatiseur pouvant interdire l'arrêt automatique du moteur thermique dans certains cas de convergence en température de l'habitacle.

6. Procédé selon l'une des revendications 4 à 5 **caractérisé en ce que** la vérification de l'état du vide dans le système de freinage comprend la comparaison du niveau de vide dans le système de freinage avec un seuil prédéterminé et si ledit niveau de vide est inférieur audit seuil l'arrêt automatique du moteur thermique n'est pas autorisé.

7. Procédé selon l'une des revendications 4 à 6 **caractérisé en ce que** la vérification de l'état du système d'alimentation et de gestion énergétique et électrique concerne au moins l'état de charge de la batterie du véhicule, l'arrêt automatique du moteur étant interdit si ladite charge est inférieure à un seuil prédéterminé.

8. Procédé selon l'une des revendications précédentes **caractérisé en ce que** ledit avertissement du conducteur peut comporter une information précisant que l'indisponibilité de l'arrêt automatique du moteur thermique pourrait être terminée après un intervalle de temps déterminé.

9. Procédé selon l'une des revendications précédentes **caractérisé en ce que** l'on arrête ledit avertissement du conducteur si ce dernier interrompt sa demande d'arrêt automatique du moteur ou si la fonction STT passe de l'état activé à l'état désactivé, ou si la demande d'arrêt du moteur de la part du conducteur est valable et si l'interdiction d'arrêt du moteur par le système véhicule est terminée..

## Patentansprüche

1. Verfahren zum Versand einer versichernden Information an den Fahrer eines mit einem Verbrennungsmotor und einem automatischen Start-Stopp-System STT des Motors ausgestatteten Fahrzeugs, wobei das Verfahren die Schritte Überprüfen, dass der Fahrer den automatischen Stopp des Motors verlangt hat, Bestimmen, dass das Fahrzeugsystem aufgrund von mindestens einer von einer Vielzahl von Anforderungen den automatischen Stopp erlaubt oder verbietet, umfasst, **dadurch gekennzeichnet, dass**, wenn der automatische Stopp wirklich verlangt wurde und wenn das Fahrzeugsystem den automatischen Stopp verbietet, Meldung an den Fahrer, dass der automatische Nicht-Stopp des Motors eine normale Funktion ist, wobei die Überprüfung, dass der Fahrer den automatischen Stopp verlangt hat, die folgenden Schritte umfasst: die Anforderung des Stopps des Motors wird vom STT-System bestätigt, und die STT-Funktion ist aktiviert, und der Motor ist nicht gestoppt.

2. Verfahren nach Anspruch 1, **dadurch gekennzeichnet, dass** die Meldung an den Fahrer in Form einer visuellen und/oder akustischen Nachricht erfolgt.

3. Verfahren nach einem der vorangehenden Ansprüche, **dadurch gekennzeichnet, dass** die Bestimmung dessen, ob das Fahrzeugsystem den Stopp des Motors erlaubt oder verbietet, darin besteht, sich zu vergewissern, dass der Stopp des Motors unter guten Sicherheits- und Leistungsbedingungen des Fahrzeugs durchgeführt werden kann durch Überprüfung des Zustands der Bremse, der Servolenkung, des ABS- und/oder ESP-Systems und der Aufhängung des Fahrzeugs.

4. Verfahren nach einem der vorangehenden Ansprüche, **dadurch gekennzeichnet, dass** die Bestimmung dessen, ob das Fahrzeugsystem den Stopp des Motors erlaubt oder verbietet, darin besteht, sich zu vergewissern, dass der Stopp des Motors unter guten Sicherheits- und Leistungsbedingungen des Fahrzeugs durchgeführt werden kann durch mindestens einen der folgenden Überprüfungsschritte:
- die Anwesenheit des Fahrers im Fahrgastraum, oder
- der Zustand des thermischen Systems im Fahrgastraum, oder
- der Zustand der Motorantriebsgruppe, einschließend den Motor an sich und das Getriebe, oder
- der Zustand der Leere im Bremssystem, oder
- der Zustand des Energie- und Stromversorgungs- und Verwaltungssystems, oder
- die Position des Gangschaltungshebels, die Position Rückwärtsgang, die den automatischen Stopp des Motors verbietet, oder
- die von dem Fahrzeug nach dem Lösen der elektrischen Parkbremse oder nach dem Starten des Motors mit dem Starterschlüssel erreichte Geschwindigkeit, oder
- der Öffnungszustand der Motorhaube.

5. Verfahren nach Anspruch 4, **dadurch gekennzeichnet, dass** der Zustand des thermischen Systems des Fahrgastraums die Bestimmung des ein- oder ausgeschalteten Zustands der Klimaanlage aufweist, wobei die eingeschaltete Klimaanlage den automatischen Stopp des Verbrennungsmotors in bestimmten Fällen von Temperaturkonvergenz des Fahrgastraums verbieten kann.

6. Verfahren nach einem der Ansprüche 4 bis 5, **dadurch gekennzeichnet, dass** die Überprüfung des Zustands der Leere im Bremssystem den Vergleich des Leerstands im Bremssystem mit einem vorbestimmten Niveau umfasst und wenn der Leerstand unter dem Niveau ist, der automatische Stopp des Verbrennungsmotors nicht erlaubt ist.

7. Verfahren nach einem der Ansprüche 4 bis 6, **dadurch gekennzeichnet, dass** die Überprüfung des Zustands des Energie- und Stromversorgungs- und Verwaltungssystems mindestens den Ladezustand der Batterie des Fahrzeugs betrifft, wobei der automatische Stopp des Motors verboten ist, wenn die Ladung unter einem vorbestimmten Grenzwert ist.

8. Verfahren nach einem der vorangehenden Ansprüche, **dadurch gekennzeichnet, dass** die Meldung an den Fahrer eine Information beinhalten kann, die präzisiert, dass die Nichtverfügbarkeit des automatischen Stopps des Verbrennungsmotors nach einem bestimmten Zeitintervall beendet sein könnte.

9. Verfahren nach einem der vorangehenden Ansprüche, **dadurch gekennzeichnet, dass** die Meldung an den Fahrer gestoppt wird, wenn dieser sein Verlangen nach automatischem Stopp des Motors unterbricht oder wenn die STT-Funktion vom aktivierten Zustand in den deaktivierten Zustand wechselt oder wenn das Verlangen nach automatischem Stopp des Motors von Seiten des Fahrers gültig ist und wenn das Verbot des Stopps des Motors durch das Fahrzeugsystem beendet ist.

## Claims

1. Method of providing reassuring information to the driver of a vehicle equipped with a combustion engine and an automatic engine stop and start system (STT system), whereby the method comprises the steps of verifying that the driver has requested an automatic engine stop, determining whether the vehicle system authorises or prohibits the automatic engine stop according to at least one of a plurality of restrictions, **characterised in that** if the automatic stop was indeed requested and if the vehicle system prohibits the automatic stop, the driver is warned that the absence of the automatic engine stop is a normal functional event, whereby the verification that the driver has requested the automatic stop comprises the following steps: the engine stop request is confirmed by the STT system, the STT function is activated, and the engine is not stopped.

2. Method according to claim 1, **characterised in that** the driver warning is provided in the form of an illuminated and/or audible message.

3. Method according to one of the previous claims, **characterised in that** the step of determining whether the vehicle system authorises or prohibits the engine stop comprises ensuring that the engine stop can be performed under safe conditions while maintaining the functionalities offered by the vehicle, by verifying the state of the brake, power steering, ABS and/or ESP system and vehicle suspension.

4. Method according to one of the previous claims, **characterised in that** the step of determining whether the vehicle system authorises or prohibits the engine stop comprises ensuring that the engine stop can be performed under safe conditions while maintaining the functionalities offered by the vehicle, by verifying at least one of the following:
- the presence of the driver in the cabin, or
- the state of the thermal system of the cabin, or
- the state of the power train including the engine and the transmission, or
- the state of the vacuum in the brake system, or
- the state of the power supply and electricity and power management system, or
- the position of the gear shift lever, the Reverse position prohibiting the automatic engine stop, or
- the speed reached by the vehicle after releasing the electric parking brake or after starting the engine using an ignition key, or
- the open state of the engine compartment hood.

5. Method according to claim 4, **characterised in that** the step of verifying the state of the thermal system of the cabin comprises determining the on or off state of the climate control unit, whereby in certain cases of converging cabin temperature, operation of the climate control system can prohibit the automatic stop of the combustion engine.

6. Method according to one of claims 4 to 5, **characterised in that** the step of verifying the state of the vacuum in the brake system comprises comparing the vacuum level in the brake system with a predetermined threshold and if said vacuum level is lower than said threshold, the automatic stop of the combustion engine is not authorised.

7. Method according to one of claims 4 to 6, **characterised in that** the step of verifying the state of the power supply and electricity and power management system involves at least verifying the charge state of the vehicle battery, whereby the automatic stop of the engine is prohibited if said charge state is lower than a predetermined threshold.

8. Method according to one of the previous claims, **characterised in that** said driver warning can comprise information specifying that the unavailability of the automatic stop of the combustion engine could be ended after a specific time interval.

9. Method according to one of the previous claims, **characterised in that** said driver warning is ended if the driver cancels his/her automatic engine stop request, or if the STT function changes from the active state to the inactive state, or if the engine stop request by the driver is valid and if the prohibition of the engine stop by the vehicle system is ended.
